# EUROPÄISCHE PATENTSCHRIFT

(11) **EP 4 331 809 B1**
(45) Veröffentlichungstag und Bekanntmachung des Hinweises auf die Patenterteilung: **11.06.2025**
(21) Anmeldenummer: 23193373.0
(22) Anmeldetag: 25.08.2023
(51) Int. Cl.: B29C 49/78, B29C 49/06, B29C 49/36, B29L 31/00

(54) **VERFAHREN UND VORRICHTUNG ZUM MINIMIEREN EINER ABWEICHUNG EINES PHYSISCHEN PARAMETERS EINES BLASGEFORMTEN BEHÄLTERS VON EINEM SOLLWERT**
METHOD AND DEVICE FOR MINIMIZING A DEVIATION OF A PHYSICAL PARAMETER OF A BLOW-MOLDED CONTAINER FROM A DESIRED VALUE
PROCÉDÉ ET DISPOSITIF POUR MINIMISER L'ÉCART D'UN PARAMÈTRE PHYSIQUE D'UN RÉCIPIENT MOULÉ PAR SOUFFLAGE D'UNE VALEUR DE CONSIGNE

(30) Priorität: 31.08.2022 DE 102022121954
(43) Veröffentlichungstag der Anmeldung: 06.03.2024
(73) Patentinhaber: KRONES Aktiengesellschaft, 93073 Neutraubling (DE)
(72) Erfinder: Boettcher, Benedikt, 93073 Neutraubling (DE); Albrecht, Thomas, 93073 Neutraubling (DE); Domeier, Bernhard, 93073 Neutraubling (DE); Krause, Ilona, 93073 Neutraubling (DE)
(74) Vertreter: Grünecker Patent- und Rechtsanwälte PartG mbB

(56) Entgegenhaltungen:
- EP-B1- 2 470 348
- WO-A1-2017/144145
- WO-A1-2020/226921
- DE-A1- 10 000 859
- DE-B3- 10 165 127
- US-A1- 2016 136 868

## Beschreibung

Die Erfindung bezieht sich auf ein Verfahren zum Minimieren einer Abweichung eines physischen Parameters eines blasgeformten Behälters von einem Sollwert gemäß unabhängigem Anspruch 1 und auf eine entsprechende Vorrichtung gemäß unabhängigem Anspruch 12.

### Stand der Technik

Zum Herstellen von Behältern hat sich das Blasformen etabliert. Hierbei wird ein Vorformling zuerst mittels einer Heizvorrichtung auf eine bestimmte Zieltemperatur gebracht und anschließend in eine Blasform überführt, in welcher dann ein Beaufschlagen des Vorformlings mit Blasluft stattfindet. Durch das Beaufschlagen mit Blasluft extrudiert der vortemperierte Vorformling in der Blasform und passt sich deren Konturen an. Je nach Ausgestaltung der Blasform lassen sich somit Behälter verschiedenster Form erzeugen. Durch das Blasformen können insbesondere Behälter mit geringer Wanddicke hergestellt werden.

Die Qualität eines blasgeformten Behälters kann anhand der Druckfestigkeit entlang der Behälterlängsachse, auch Topload genannt, und anhand der Druckfestigkeit entlang der Behälterquerachse, auch Sideload genannt, beurteilt werden. Die Topload und die Sideload hängen wiederum von einer Wanddicke oder einer Wanddickenverteilung des Behälters ab. Um Behälter gleichbleibender Qualität herzustellen, ist es folglich wünschenswert, Behälter mit einer Wanddicke oder ein Wanddickenprofil zu erzeugen, welches möglichst wenig von einer Sollwanddicke oder einem Sollwanddickenprofil abweicht.

Aus dem Stand der Technik ist bekannt die Wanddicke von Behältern nach dem Blasformprozess messtechnisch zu erfassen und basierend auf den erlangten Daten einen Maschinenparameter einer Blasformmaschine so anzupassen, dass die Abweichung der Wanddicke von einem vorgebebenen Sollwert minimiert wird.

In der EP1998950B1 wird zum Beispiel ein Verfahren und eine Vorrichtung zum Bestimmen der Wanddicke eines Behälters offenbart, wobei nach dem Blasvorgang eine Messung der Wanddicke stattfindet und basierend auf dem Vergleich zwischen dem gemessenem Wert und einem Sollwert, eine Regelung eines Heizstrahlers zum Erwärmen eines Vorformlings vor dem Blasvorgang stattfindet.

Die DE 101 65 127 B3 betrifft ein Verfahren zur Steuerung eines Streckblasvorgangs bei der Herstellung von Behältern aus einem thermoplastischen Material, bei dem Vorformlinge wärmekonditioniert, einer Mehrzahl von Streckblasstationen zugeführt, mechanisch gereckt, mit einem Vorblasdruck und einem Fertigblasdruck in einem Formungshohlraum aufgeblasen werden, und mindestens eine Eigenschaft eines hergestellten Behälters erfasst wird, wobei als mindestens eine Eigenschaft die Wandstärke eines Behälters unmittelbar nach dessen Herstellung erfasst und mit einer Sollgröße dieser mindestens einen erfassten Eigenschaft verglichen wird, und ein zur Erwärmung der Vorformlinge erzeugtes Temperaturprofil in Abhängigkeit von der Größe des Vergleichsergebnisses in Richtung auf eine Verringerung dieser Größe verändert wird, wobei die Vorformlinge durch mehrere übereinandere angeordnete, einzeln ansteuerbare Heizelemente erwärmt werden, um das Temperaturprofil in axialer Richtung zu erzeugen.

Die US 2016/136868 A1 offenbart ein Verfahren zum Betreiben einer Vorrichtung zum Umformen von Kunststoffvorformlingen in Kunststoffbehältnissen. Bei dem Verfahren wirkt die Vorrichtung auf Kunststoffvorformlinge mit einem fließfähigen Medium ein, um diese Kunststoffvorformlinge zu den Kunststoffbehältnissen zu expandieren, und die Vorrichtung führt diesen Umformvorgang unter Berücksichtigung von einer Vielzahl von Prozessparametern aus. Die Mehrzahl von Prozessparametern wird auf Basis eines Maschinenmodells ermittelt, wobei diesem Maschinenmodell eine vordefinierte Anzahl von Eingabeparametern übergeben werden und mindestens eine Prozessoreinheit bestimmt die Prozessparameter und/oder für diese Prozessparameter charakteristische Werte auf Basis dieser Eingabeparameter.

In der DE 100 00 859 A1 wird ein automatisiertes Verfahren zum spanlosen Umformen einer dünnwandigen Seitenwandung eines Körpers und eine Vorrichtung zur Durchführung des Verfahrens offenbart.

### Zu lösende technische Aufgabe

Im Hinblick auf den Stand der Technik liegt die zu lösende technische Aufgabe der vorliegenden Erfindung darin, die Qualität blasgeformter Behälter zu verbessern.

### Lösung

Die Erfindung sieht zur Lösung dieser Aufgabe ein Verfahren zum Minimieren einer Abweichung eines physischen Parameters eines blasgeformten Behälters von einem Sollwert entsprechend unabhängigem Anspruch 1, sowie eine entsprechende Vorrichtung entsprechend unabhängigem Anspruch 12 vor. Bevorzugte Ausführungsformen der Erfindung sind in den abhängigen Ansprüchen ausgeführt.

Das erfindungsgemäße Verfahren zum Minimieren einer Abweichung eines physischen Parameters eines blasgeformten Behälters von einem Soll-Wert umfasst:
- Bestimmen eines einem Maschinenparameterwertes einer Blasformmaschine zugeordneten physischen Parameters eines Behälters,
- Basierend auf dem physischen Parameter und dem Soll-Wert, Bestimmen einer Änderung eines Maschinenparameterwertes,
- Basierend auf einem Iterationsprozess, Bestimmen eines optimalen Maschinenparameterwerts zum Erreichen einer minimalen Abweichung von dem Sollwert des physischen Parameters eines blasgeformten Behälters, der Iterationsprozess umfassend einen
- Ersten Iterationsschritt zur Bestimmung einer Abweichung von dem Sollwert des physischen Parameters eines blasgeformten Behälters basierend auf einer Änderung des Maschinenparameterwertes, und einen
- Zweiten Iterationsschritts zur Bestimmung einer angepassten Änderung des Maschinenparameterwerts basierend auf der Abweichung des physischen Parameters eines blasgeformten Behälters von dem Sollwert,
- Erlangen des optimalen Maschinenparameterwertes;
wobei das Verfahren weiterhin ein Steuern der Blasformmaschine basierend auf dem erlangten optimalen Maschinenparameterwert umfasst.

Anstatt basierend auf einer Abweichung des physischen Parameters von einem Sollwert direkt einen Maschinenparameter anzupassen, wobei der angepasste Maschinenparameter eindeutig (deterministisch) mit der Abweichung vom Sollwert verknüpft ist, bestimmt das erfindungsgemäße Verfahren mittels eines Iterationsprozesses einen optimalen Maschinenparameter zum Minimieren der Abweichung, und gibt den bestimmten optimalen Maschinenparameter an die Maschine weiter. Eine vorher bekannte eindeutige Verknüpfung zwischen Abweichung vom Sollwert und angepasstem Maschinenparameter, wie es aus dem Stand der Technik bekannt ist, liegt somit bei dem erfindungsgemäßen Verfahren nicht vor (nicht deterministisch). Durch die iterative Bestimmung des optimalen Maschinenparameters kann eine präzisere und effizientere Anpassung des Maschinenparameters zur Minimierung der Abweichung des physischen Parameters von einem Sollwert im Vergleich zum Stand der Technik erreicht werden, wo der Maschinenparameter direkt aus der gemessenen Abweichung des physischen Parameters von dem Sollwert abgeleitet wird. Unter dem Maschinenparameter im Sinne der Erfindung ist ein Maschinenparameter der Blasformmaschine zu verstehen, welcher einen Einfluss auf den physischen Parameter des Behälters hat. So kann es sich bei dem Maschinenparameter beispielsweise um eine Heizleistung oder eine charakteristische Größe für die Heizleistung einer Heizvorrichtung zum Erwärmen des Vorformlings, um eine Einschaltdauer der Heizvorrichtung, um ein durch die Heizvorrichtung generiertes Temperaturprofil im Vorformling, um eine Temperatur des mittels der Heizvorrichtung erwärmten Vorformlings, um einen Vor- oder Blasdruck, um ein Vor- oder ein Blasdruckprofil, um eine Vor- oder eine Blaszeit, um eine Temperatur einer Blasform, um eine Reckgeschwindigkeit, um ein Reckprofil handeln. Die für die Heizleistung charakteristische Größe kann eine Größe sein, welche mit der Heizleistung in Verbindung steht, wie beispielweise ein Heizstrom oder eine Spannung. Der Maschinenparameter ist jedoch nicht auf die eben aufgeführten Beispiele beschränkt und kann auch jeder andere Maschinenparameter sein, welcher einen Einfluss auf den physischen Parameter eines Behälters nehmen kann. Es kann vorgesehen sein, dass die Änderung des Maschinenparameters vor Ausführung des Iterationsprozesses mit einem Startwert initialisiert wird.

Das erfindungsgemäße Verfahren ist ausgebildet, die Abweichung eines physischen Parameters eines jeden blasformbaren Behälters zu minimieren. Vorzugsweise handelt es sich bei dem blasformbaren Behälter um eine in der Getränkeindustrie verwendete Flasche, welche aus Kunststoff besteht oder Kunststoff umfasst. Die Vorrichtung ist jedoch nicht auf diese Art von Behälter beschränkt und kann beispielsweise auch zur Herstellung von Dosen, Bechern oder Tuben aus blasformbarem Material, wie sie in der Lebensmittel-, Getränke-, Pharma- oder Gesundheitsindustrie Anwendung finden, eingesetzt werden.

Optional kann neben dem Bestimmen eines einem Maschinenparameterwert einer Blasformmaschine zugeordneten physischen Parameters eines Behälters auch das Bestimmen einer Störgröße vorgesehen sein. Unter einer Störgröße soll im Folgenden grundsätzlich jeder Einfluss auf den physischen Parameter des Behälters verstanden werden, der nicht durch den Betrieb der Maschine und damit die oben diskutierten Maschinenparameter direkt bewirkt wird. Die Störgröße kann eine Umgebungsbedingung, wie beispielsweise eine Umgebungstemperatur, ein Umgebungsdruck, eine Umgebungsluftfeuchtigkeit, eine Temperatur und/oder eine Luftfeuchtigkeit einer Luft, welche der Heizvorrichtung zum Temperieren des Vorformlings, oder einem Kompressor zur Erzeugung des Vorblas- und/oder der Blasdrucks zugeführt wird, sein. Es kann sich allerdings auch um jede andere Umgebungsbedingung, welche den physischen Parameter des Behälters beeinflussen kann, handeln. Die Störgröße kann auch eine Eigenschaft eines Vorformlings, aus dem der Behälter hergestellt wird, beschreiben. Eine Eigenschaft eines Vorformlings kann beispielsweise eine Materialzusammensetzung des Vorformlings, oder eine Eigenschaft des Materials, aus welchem der Vorformling besteht oder welches der Vorformling umfasst, wie beispielsweise eine Viskosität, ein Copolymer-Anteil, eine Feuchtigkeit oder Kristallisationsgrad, oder die Temperatur des Vorformlings nach Durchlaufen der Heizvorrichtung, sein. Es kann sich jedoch auch um jede andere hier nicht explizit aufgeführte Störgröße handeln, insofern diese einen Einfluss auf den physischen Parameter des Behälters hat.

Unter dem physischen Parameter des Behälters ist ein Parameter zu verstehen, welcher eine physische Eigenschaft des Behälters beschreibt. Insbesondere kann es sich um eine durch den Blasvorgang veränderbare physische Eigenschaft des Behälters handeln. Bei dem physischen Parameter kann es sich beispielsweise um eine Wanddicke, um eine für die Wanddicke charakteristische Größe, um eine Bodendicke, um eine für die Bodendicke charakteristische Größe, um einen Offset-Anspritzpunkt, um eine Größe einer Anspritzlinse, wobei die Anspritzlinse das Zentrum des Anspritzpunktes darstellt, oder eine Molekülausrichtung des Behälters handeln. Die für die Wanddicke oder die Bodendicke charakteristische Größe kann beispielsweise den Anteil einer durch eine Wand- oder Bodendicke transmittierten Intensität elektronmagnetischer Strahlung an einer auf die Boden- oder Wanddicke eingestrahlten Intensität der elektromagnetischen Strahlung umfassen. des Behälters sein.Die für die Wand- oder Bodendicke charakteristische Größe kann im Allgemeinen neben der Wand- oder der Bodendicke auch von anderen Kenngrößen des Behälters, wie beispielsweise einer Materialzusammensetzung abhängen. Da die für Wand- oder Bodendicke charakteristische Größe von verschiedenen Kenngrößen des Behälters abhängen kann, kann die Messung der charakteristischen Größe und deren Vergleich mit einem Sollwert besser geeignet für die Beurteilung der Qualität des Behälters sein als die bloße Messung einer Wand- oder Bodendicke. Es kann sich jedoch auch um jeden anderen hier nicht explizit erwähnten physischen Parameter eines Behälters handeln.

Unter dem Sollwert des physischen Parameters ist ein vorgegebener Wert des physischen Parameters zu verstehen. Der vorgegebene Wert kann beispielsweise ein Wert sein, der aus Produktanforderungen ermittelt wird. Soll beispielsweise eine Flasche eine bestimmte Festigkeit besitzen, kann etwa die Wandstärke auf einen bestimmten Wert festgelegt werden, der die gewünschte Festigkeit erreicht. Dieser Wert kann dann als Sollwert des physischen Parameters genutzt werden.

In einer Ausführungsform kann zum Bestimmen der Abweichung von dem Sollwert des physischen Parameters eines blasgeformten Behälters ein prädiktives Modell verwendet werden. Bei dem prädiktiven Modell kann sich um ein trainiertes und validiertes prädiktives Modell handeln. Das prädiktive Modell kann beispielsweise als Entscheidungsbaum, als zufälliger Entscheidungsbaum, als verstärkter Entscheidungsbaum, als Polynommodell mit verschiedenen Ordnungen und Wechselwirkungen oder als lineares oder nicht-lineares ARX Modell ausgeführt sein. Das prädiktive Modell ist jedoch nicht auf diese Beispiele beschränkt, es kann sich somit auch um jedes andere prädiktive Modell handeln. So kann alternativ beispielsweise auch ein physikalisches Modell zur Bestimmung der Abweichung von dem Sollwert des physischen Parameters eines Behälters vorgesehen sein.

Durch die Verwendung eines prädiktiven Modells lässt sich der Einfluss der Änderung des Maschinenparameters und/oder der Störgröße auf den physischen Parameter eines blasgeformten Behälters präzise vorhersagen. Insbesondere kann damit ein mehrmaliges Nachjustieren an der Maschine zum Finden des optimalen Maschinenparameters vermieden werden und somit eine höhere Qualität auch bei höheren Behälterdurchsätzen erreicht werden.

In einer bevorzugten Ausführungsform kann das prädiktive Modell ein erstes neuronales Netz sein oder ein erstes neuronales Netz umfassen. Bei dem neuronalen Netz kann es sich wie bei dem prädiktiven Modell um ein trainiertes und validiertes neuronales Netz handeln. Durch die Wahl eines neuronalen Netzes als prädiktives Modell lässt sich eine noch präzisere und effizientere Vorhersage des Einflusses der Änderungen des Maschinenparameters und/oder der optionalen Störgröße auf den physischen Parameter eines blasgeformten Behälters erreichen. Da die Bestimmung optimaler Maschinenparameter letztlich die Optimierung eines von einer Vielzahl von Einflüssen abhängigen Parameters erfordert, können neuronale Netze, die insbesondere für diese Anwendung durch geeignete Trainingsdaten trainiert wurden, hier besonders vorteilhaft eingesetzt werden, da neuronale Netze besonders vorteilhaft zur Mustererkennung verwendet werden können.

In einer Ausführungsform kann der Iterationsprozess auf einem Reinforcement Learning Modell und insbesondere auf einem Deep Reinforcement Learning Modellbasieren. Das Reinforcement Learning Modell ist besonders geeignet, um eine optimale Strategie zum Minimeren der Abweichung des physischen Parameters des Behälters von einem Sollwert zu finden. Durch die Verwendung eines Reinforcement Learning Modells kann somit die Effizienz des Verfahrens verbessert werden. Alternativ kann auch ein evolutionärer Algorithmus oder ein anderes naturanaloges Optimierungsverfahren zum Minimieren der Abweichung des physischen Parameters von einem Sollwert vorgesehen sein.

In einer Ausführungsform kann das Reinforcement Learning Modell eine erste Komponente und eine zweite Komponente umfassen. Durch die Interaktion der zweiten Komponente mit der ersten Komponente kann der optimale Maschinenparameter zum Minimieren der Abweichung des physischen Parameters eines blasgeformten Behälters von einem Soll-Wert erlangt werden kann. Die erste Komponente des Reinforcement Learning Modells ist generell als Environment und die zweite Komponente des Reinforcement Learning Modells als Agent bekannt. Der Agent agiert dabei mit dem Environment und führt basierend auf einem vom Environment erhaltenem Zustandswert und einer Belohnung eine Aktion am Environment durch. Ziel des Agenten ist es, die Belohnung durch entsprechende Anpassung der Aktion zu maximieren. Folglich kann durch die Anpassung beziehungsweise Optimierung der Änderung des Maschinenparameters (Aktion) durch die zweite Komponente im Zusammenspiel mit der ersten Komponente der optimale Maschinenparameter gefunden werden, mittels welchem die Abweichung des physischen Parameters (Belohnung) minimiert und die Qualität eines blasgeformten Behälters somit verbessert werden kann.

In einer Ausführungsform kann die erste Komponente des Reinforcement Learning Modells ein prädiktives Modell oder ein erstes neuronales Netz sein oder ein prädiktives Modell oder ein erstes neuronales Netz umfassen. Durch die Wahl des prädiktiven Modells oder des ersten neuronalen Netzes als erste Komponente kann dem Reinforcement Learning Modell ein Zusammenhang zwischen dem Maschinenparameter, der optionalen Störgröße und der Abweichung des physischen Parameters zuverlässig zur Verfügung gestellt werden.

In einer Ausführungsform kann die zweite Komponente des Reinforcement Learning Modells ein drittes neuronales Netz umfassen oder aus einem dritten neuronalen Netz bestehen. Neuronale Netze sind, wie oben bereits ausgeführt wurde, besonders geeignet, da mit Ihnen präzise Vorhersagen in kurzer Zeit getroffen werden können.

In einer Ausführungsform kann der erste Iterationsschritt zur Bestimmung eines physischen Parameters eines blasgeformten Behälters basierend auf der Änderung des Maschinenparameters durch das prädiktive Modell oder das erste neuronale Netz und der zweite Iterationsschritt zur Bestimmung einer angepassten Änderung eines Maschinenparameterwerts basierend auf der Abweichung des physischen Parameters vom Sollwert durch das dritte neuronale Netz ausgeführt werden.

In einer Ausführungsform kann das Erlangen des optimalen Maschinenparameterwerts auf einer Bestimmung einer optimalen angepassten Änderung basierend auf einer minimalen Abweichung vom Sollwert des physischen Parameters aus der Menge der Abweichungen vom Sollwert des physischen Parameters beruhen.

In einer Ausführungsform kann der physische Parameter des blasgeformten Behälters eine für eine Wanddicke des Behälters charakteristische Größe, eine Wanddicke, eine Bodendicke, eine für die Bodendicke charakteristische Größe und/oder eine Molekülausrichtung sein oder diese umfassen Die für die Wanddicke oder die Bodendicke charakteristische Größe kann beispielsweise den Anteil einer durch eine Wand- oder Bodendicke transmittierten Intensität elektromagnetischer Strahlung an einer auf die Boden- oder Wanddicke eingestrahlten Intensität der elektromagnetischen Strahlung umfassen. Die für die Wand- oder Bodendicke charakteristische Größe kann nicht nur von der Wand- oder Bodendicke des Behälters, sondern auch von anderen Eigenschaft des Behälters, wie beispielsweise einer Materialzusammensetzung des Behälters abhängen. Die für die Wanddicke charakteristische Größe, die Wanddicke, die für die Bodendicke charakteristische Größe, die Bodendicke oder die Molekülausrichtung eines Behälters können einen direkten Einfluss auf die maximal Top- oder Sideload, welche auf einen Behälter ausgeübt werden kann, haben und erlauben somit einen direkten Rückschluss auf die Qualität des Behälters. Die Minimierung einer Abweichung dieser Parameter von einem Sollwert erlaubt somit eine Verbesserung der Qualität eines blasgeformten Behälters. Optional kann der physische Parameter auch ein Offset-Anspritzpunkt oder eine Größe einer Anspritzlinse, wobei die Anspritzlinse das Zentrum des Anspritzpunktes darstellt, sein.

In einer Ausführungsform kann es vorgesehen sein neben dem einem Maschinenparameterwertes einer Blasformmaschine zugeordneten physischen Parameter eines Behälters eine Störgröße zu bestimmen. Die Störgröße kann eine Umgebungsbedingung und/oder eine Eigenschaft eines Vorformlings sein. Sowohl die Umgebungsbedingung als auch die Eigenschaft eines Vorformlings, wobei es sich bei der Eigenschaft beispielsweise um dessen Materialzusammensetzung oder eine Eigenschaft des Materials aus welchem der Vorformling besteht oder welches der Vorformling umfasst oder um eine Temperatur des Vorformlings nach Durchlaufen einer Heizvorrichtung, stehen im direkten Zusammenhang mit dem physischen Parameter des Behälters. Eine Berücksichtigung dieser beiden Störgrößen verbessert folglich den Optimierungsprozess und führt zu einer verbesserten Qualität des blasgeformten Behälters.

Erfindungsgemäß ist zudem eine Blasformmaschine zum Herstellen von Behältern vorgesehen. Die Blasformmaschine umfasst eine Sensoreinrichtung und eine Steuervorrichtung, wobei die Sensoreinrichtung ausgebildet ist, einen einem Maschinenparameterwert der Blasformmaschine zugeordneten physischen Parameter eines Behälters zu bestimmen und den Maschinenparameterwert und den physischen Parameter an die Steuervorrichtung weiterzugeben, wobei die Steuereinrichtung ausgebildet ist zum
- Basierend auf dem physischen Parameter und einem Soll-Wert, Bestimmen einer Änderung eines Maschinenparameterwertes,
- Basierend auf einem Iterationsprozess, Bestimmen eines optimalen Maschinenparameterwerts zum Erreichen einer minimalen Abweichung von dem Sollwert des physischen Parameters, der Iterationsprozess umfassend einen
- Ersten Iterationsschritt zur Bestimmung einer Abweichung von dem Sollwert des physischen Parameters eines blasgeformten Behälters basierend auf einer Änderung des Maschinenparameters, und einen
- Zweiten Iterationsschritts zur Bestimmung einer angepassten Änderung eines Maschinenparameterwerts basierend auf der Abweichung des physischen Parameters von dem Sollwert,
- Erlangen des optimalen Maschinenparameterwertes,
und wobei die Steuereinrichtung zum Steuern der Blasformmaschine basierend auf dem erlangten optimalen Maschinenparameterwert ausgebildet ist.

In einer Ausführungsform kann vorgesehen sein, dass zum Bestimmen des Einflusses einer Änderung des Maschinenparameterwerts und/oder einer optionalen Störgröße auf den physischen Parameter eines Behälters ein prädiktives Modell verwendet wird und der Iterationsprozess auf einem Reinforcement Learning Modell basiert, wobei das Reinforcement Learning Modell eine erste und eine zweite Komponente umfasst und wobei die erste Komponente das prädiktive Modell ist, welches als ein erstes neuronales Netz ausgebildet sein kann, und die zweite Komponente ein drittes neuronales Netz umfasst. Durch die Verwendung eines prädiktiven Modells oder eines neuronalen Netzes, kann der Einfluss der Änderung eines Maschinenparameters und/oder einer optionalen Störgröße präzise und effizient vorhergesagt werden. Die Verwendung eines Reinforcement Learning Modells erlaubt wiederum eine optimale Strategie zu finden, um die Abweichung des physischen Parameters des Behälters von einem Sollwert zu minimieren und somit die Qualität der blasgeformten Behälter zu verbessen.

In einer spezielleren Ausführungsform kann es vorgesehen sein, dass die Sensoreinrichtung einen Sensor, der zur Bestimmung des physischen Parameters des blasgeformten Behälters ausgebildet ist, umfasst. Optional kann die Sensoreinrichtung einen zusätzlichen Sensor welcher zum Bestimmen einer Störgröße ausgebildet ist und/oder einen weiteren zusätzlichen Sensor, der zum Bestimmen des Maschinenparameterwertes der Blasformmaschine ausgebildet ist, umfassen.

In einer weiteren Ausführungsform kann es vorgesehen sein, dass der Sensor zur Bestimmung einer für eine Wanddicke charakteristische Größe, einer Wanddicke, einer für eine Bodendicke charakteristische Größe, einer Bodendicke und/oder einer Molekülausrichtung eines blasgeformten Behälters ausgebildet ist. Die für die Wanddicke oder die Bodendicke charakteristische Größe kann beispielsweise den Anteil einer durch eine Wand- oder Bodendicke transmittierten Intensität elektromagnetischer Strahlung an einer auf die Boden- oder Wanddicke eingestrahlten Intensität der elektromagnetischen Strahlung umfassen. Die für die Wand- oder Bodendicke charakteristische Größe kann auch von anderen physischen Parameters des Behälters, wie beispielsweise einer Materialzusammensetzung abhängen. Bei dem Sensor zur Bestimmung einer für die Wanddicke oder der Bodendicke charakteristischen Größe kann es sich beispielsweise um einen Ultraschallsensor oder einen spektroskopischen Sensor, welcher zum Bestimmen eines Anteils einer durch eine Wand- oder Bodendicke transmittierten Intensität elektromagnetischer Strahlung an einer auf die Boden- oder Wanddicke eingestrahlten Intensität der elektromagnetischen Strahlung ausgebildet ist, handeln. Zur Bestimmung der Molekülausrichtung des Behälters kann wiederum ein spektroskopischer Sensor vorgesehen sein. Die für die Wanddicke charakteristische Größe, die Wanddicke, die für die Bodendicke charakteristische Größe, die Bodendicke, und/oder die Molekülausrichtung können direkt mit der Druckfestigkeit entlang der Behälterlängsachse und quer zur Behälterquerachse in Verbindung gebracht werden. Deren messtechnisch genaue Bestimmung mittels eines geeigneten Sensors ist somit vorteilhaft, um die Qualität des Behälters präzise beurteilen zu können.

### Kurze Beschreibung der Figuren

- Fig. 1: Verfahren zum Minimieren einer Abweichung eines physischen Parameters eines blasgeformten Behälters entsprechend einer Ausführungsform
- Fig. 2: Reinforcement Learning Modell nach einer Ausführungsform
- Fig. 3: Blasformmaschine ausgebildet zum Minimieren eines physischen Parameters eines blasgeformten Behälters entsprechend einer Ausführungsform

### Ausführliche Beschreibung der Figuren

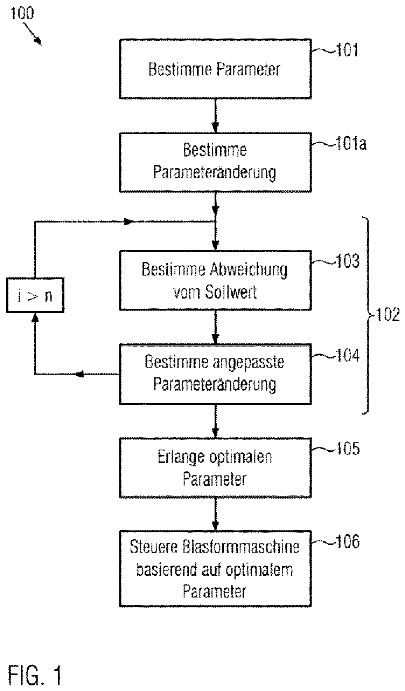

Figur 1 zeigt ein Fließschema des Verfahrens 100 zum Minimieren einer Abweichung eines physischen Parameters eines blasgeformten Behälters von einem Sollwert entsprechend einer Ausführungsform.

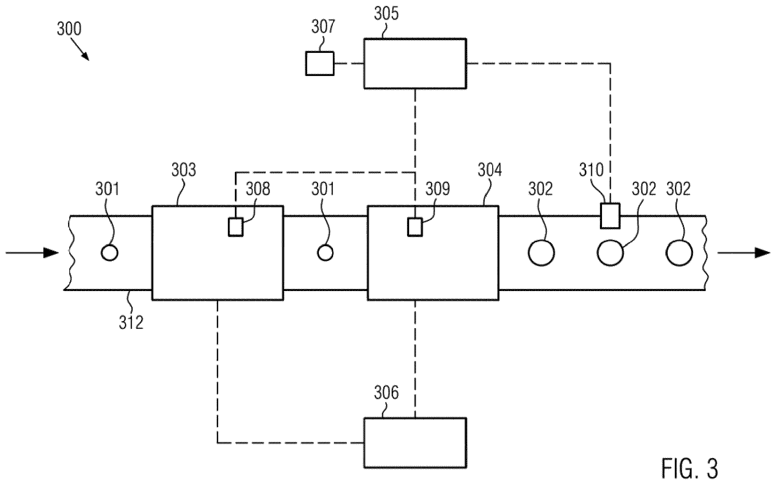

Zur Herstellung der Behälter ist eine Blasformmaschine vorgesehen, wobei die physischen Eigenschaften des Behälters durch Variation eines Maschinenparameters der Blasformmaschine beeinflusst werden können. Optional können auch andere Störgrößen, wie beispielsweise eine Umgebungsbedingung oder eine Eigenschaft des Vorformlings, aus welchem der Behälter hergestellt wird, Einfluss auf die physischen Eigenschaften des Behälters haben. Eine Blasformmaschine, welche ausgebildet ist, um das Verfahren nach Figur 1 auszuführen, ist im Zusammenhang mit der Figur 3 beschrieben.

Ziel des in der Ausführungsform der Figur 1 beschriebenen Verfahrens ist es, ein Modell anzugeben mittels welchem die Abweichung des physischen Parameters (beispielsweise eine für die Wand- oder Bodendicke eines Behälters charakteristische Größe) eines blasgeformten Behälters von einem Sollwert durch die gezielte Anpassung eines Maschinenparameters möglichst geringgehalten werden kann. Optional kann das Modell ausgebildet sein die Abweichung des physischen Parameters auch bei sich ändernden Bedingungen (Störgrößen) durch die gezielte Anpassung des Maschinenparameters möglichst gering zu halten.

Bei dem Maschinenparameter kann es sich beispielsweise um eine Heizleistung einer Heizvorrichtung zum Erwärmen des Vorformlings, um eine Einschaltdauer der Heizvorrichtung, um ein durch die Heizvorrichtung generiertes Temperaturprofil im Vorformling, um einen Vor- oder Blasdruck, um ein Vor- oder ein Blasdruckprofil, um eine Vor- oder eine Blaszeit, um die Temperatur einer Blasform und/oder um eine Reckgeschwindigkeit handeln.

Als eine Störgröße soll im Folgenden grundsätzlich jeder Einfluss auf den physischen Parameter des Behälters verstanden werden, der nicht durch den Betrieb der Maschine und damit die oben diskutierten Maschinenparameter direkt bewirkt wird. Unter den Begriff physischer Parameter kann beispielsweise auch eine den physischen Parametereines Behälters charakterisierende Größe verstanden werden, wie ein optischer Parameter, welcher beispielsweise ein Anteil einer durch eine Wand- oder Bodendicke transmittierten Intensität elektromagnetischer Strahlung an einer auf die Boden- oder Wanddicke eingestrahlten Intensität der elektromagnetischen Strahlung oder eine mittels Bildverarbeitung gemessenen Größe der Anspritzlinse sein kann. Die Störgröße kann eine Umgebungsbedingung oder eine Eigenschaft des Vorformlings, aus welchem der Behälter hergestellt wird, sein. Die Umgebungsbedingung kann beispielsweise eine Umgebungstemperatur, eine Umgebungsluftfeuchtigkeit oder ein Umgebungsdruck sein. Die Eigenschaft des Vorformlings kann beispielsweise eine Materialzusammensetzung des Vorformlings oder eine Materialeigenschaft des Vorformlings, wie beispielsweise eine Viskosität, ein Copolymer-Anteil, eine Feuchtigkeit oder Kristallisationsgrad sein.

Der Sollwert gibt im Folgenden den Wert des physischen Parameters an, der bei der Herstellung des Behälters erhalten werden soll.

Im ersten Verfahrensschritt 101 wird ein physischer Parameter eines Behälters bestimmt, welcher einem bestimmten Maschinenparameter einer Blasformmaschine zugeordnet ist. Optional kann auch eine dem Maschinenparameter der Blasformmaschine zugeordnete Störgröße bestimmt werden. Hierzu kann beispielsweise der Maschinenparameter der Blasformmaschine auf einen bestimmten Zielwert eingestellt werden und nach Erreichen des Zielwerts der physische Parameter eines Behälters und messtechnisch erfasst werden. Optional kann auch das messtechnische Erfassen einer Störgröße vorgesehen sein.

Die Änderung des Maschinenparameterwertes 101a wird in einer Ausführungsform vor Beginn des Iterationsprozesses 102 mit einem Startwert initialisiert. Der Startwert der Änderung des Maschinenparameterwertes wird dabei basierend auf dem im ersten Verfahrensschritt 101 bestimmten physischen Parameter und einem Sollwert für den physischen Parameter bestimmt. Beispielsweise kann die Änderung des Maschinenparameterwertes basierend auf einer Differenz zwischen dem Sollwert und dem messtechnisch erfassten Wert des physischen Parameters bestimmt werden.

Im anschließenden Schritt 102 wird basierend auf einem Iterationsprozess ein optimaler Maschinenparameter basierend ggf. auf dem physischen Parameter und der optionalen Störgröße bestimmt, mittels welchem eine minimale Abweichung vom Sollwert des physischen Parameters eines blasgeformten Behälters erreicht werden kann. Der Iterationsprozess umfasst zwei Iterationsschritte 103 und 104. Im ersten Iterationsschritt 103 wird eine Abweichung von dem Sollwert des physischen Parameters eines blasgeformten Behälters basierend auf einer Änderung des Maschinenparameters ggf. unter Berücksichtigung der Störgröße/Störgrößen bestimmt. Der Startwert kann beispielsweise mittels eines neuronalen Netzes bestimmt werden, welches den Startwert basierend auf den im ersten Verfahrensschritt 101 messtechnisch bestimmtem physischen Parameter, Maschinenparamater und Störgröße bestimmt. Das neuronale Netz ist bevorzugt ein bereits trainiertes oder gelerntes neuronales Netz, das spezifisch mit für die Bestimmung der Änderung der Maschinenparameter geeigneten Daten/Informationen trainiert wurde. Insbesondere kann das Training/Lernen des neuronalen Netzes mittels eines automatisiert ablaufenden statistischen Versuchsplans (DOE), bei dem verschiedene Maschinenparameterwerte automatisiert angefahren werden und ein zugeordneter physischer Parameter eines Behälters sowie eine Störgröße messtechnisch erfasst werden, erfolgen.

Im zweiten Iterationsschritt 104 wird eine angepasste Änderung eines Maschinenparameters basierend auf der im ersten Iterationsschritt 103 bestimmten Abweichung des physischen Parameters eines blasgeformten Behälters von einem Sollwert bestimmt. Die durch den zweiten Iterationsschritt 104 bestimmte, angepasste Änderung des Maschinenparameters wird anschließend dem ersten Iterationsschritt 103 als Input zur Verfügung gestellt, in welchem basierend auf der angepassten Änderung des Maschinenparameterwertes eine neue Abweichung vom Sollwert des physischen Parameters bestimmt wird. Anhand dieser neue bestimmten Abweichung vom Sollwert des physischen Parameters wird dann im zweiten Iterationsschritt wieder eine angepasste Änderung des Maschinenparameterwertes ggf. unter Berücksichtigung der Störgrößen bestimmt.

Durch einen vorher definierten stationären Grenzwert *n* kann vorgegeben werden, nach wie vielen Iterationsschritten der Iterationsprozess beendet wird. *n* ist dabei beispielsweise eine ganze Zahl größer als Null, kann aber auch jede belieben anderen Wert annehmen, sofern damit ein Vergleich zu einem fortlaufenden Index von Iterationsschritten möglich ist. In einer bevorzugten Ausführungsform kann *n* ein Wert von 10 sein. Alternativ kann auch ein niedrigerer oder höhere Wert für *n,* wie beispielsweise 3, 5, 20, 50 oder 100, vorgesehen sein. Auch jede beliebige andere Zahl ist denkbar, wobei bevorzugt die Anzahl der Iterationsschritte so gewählt werden kann, dass die Zeit, die nötig ist, um alle *n* Iterationsschritte durchzuführen möglichst unterhalb eines Grenzwertes T liegt. T kann beispielsweise abhängig vom Durchsatz oder der Antwortzeit der Blasformmaschine gewählt werden, um sicherzustellen, dass eine Anpassung des Maschinenparameters möglichst erfolgt, bevor weitere Behälter ausgeformt wurden. Beispielsweise kann *n* so gewählt werden, dass T<50ms oder T<100ms ist.

Alternativ ist auch ein dynamischer Grenzwert denkbar, welcher dynamisch während des Iterationsprozesses bestimmt wird. Es kann beispielsweise vorgesehen sein, dass der Iterationsprozess erst beendet wird, wenn die Änderung der Abweichung des physischen Parameters vom Sollwert über eine Anzahl von *i* Iterationsschritten kleiner als ein vorgegebener Grenzwert ist und/oder wenn die Abweichung des Sollwerts über eine Anzahl von *i* Iterationsschritten unterhalb eines beispielsweise durch die zu erreichende Produktionsgenauigkeit vorgegebenen Grenzwertes d liegt. In einem solchen Fall konvergiert der physische Parameter bereits gegen den Sollwert und weitere Berechnungen verbessern das Ergebnis nur noch in einem für die zu erreichende Produktionsgenauigkeit irrelevanten Maße, sodass weitere Iterationen das Ergebnis zwar verbessern können, aber für die zu erreichende Genauigkeit der Produkte nicht mehr maßgeblich sind.

Basierend auf den durch den Iterationsprozess bestimmten angepassten Änderungen des Maschinenparameters kann schließlich ein optimaler Maschinenparameter erlangt werden 105.

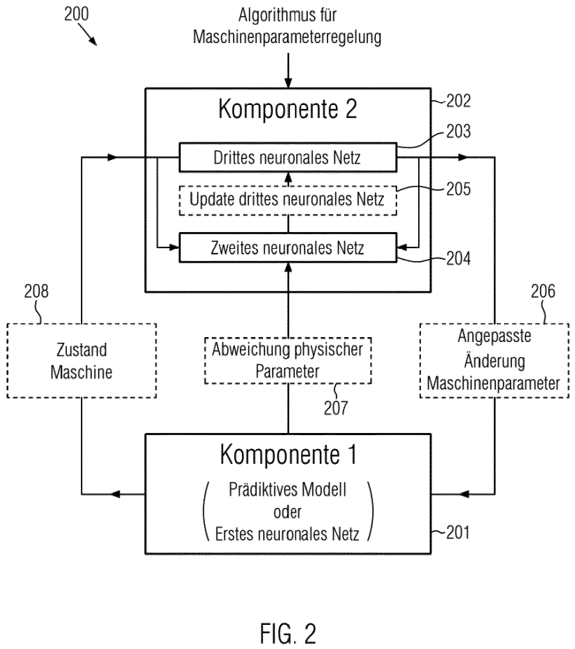

In einer Ausführungsform kann es vorgesehen sein, dass der Iterationsprozess 102 auf einem Reinforcement Learning Modell basiert. Das Reinforcement Learning Modell umfasst dabei zwei Komponenten, basierend auf deren Interaktion der optimale Maschinenparameter zum Minimieren der Abweichung des physischen Parameters eines blasgeformten Behälters von einem SollWert erlangt werden kann. In einer weiteren Ausführungsform kann es vorgesehen sein, dass die erste Komponente ein prädiktives Modell oder ein erstes neuronales Netz und die zweite Komponente ein drittes neuronales Netz umfasst. Die erste Komponente kann dabei ausgebildet sein, eine Abweichung eines physischen Parameters von einem Sollwert basierend auf einer Änderung eines Maschinenparameters zu bestimmen. Die zweite Komponente kann wiederum ausgebildet sein, eine angepasste Änderung eines Maschinenparameters zu bestimmen, um die durch die erste Komponente bestimmte Abweichung des physischen Parameters zu minimieren. Bei dem dritten neuronalen Netz kann es sich um ein mittels eines Reinforcement Learning trainiertes neuronales Netz handeln. Der Trainingsprozess des dritten neuronalen Netzes mittels des Reinforcement Learning Modells ist im Zusammenhang mit der Figur 2 genauer beschrieben.

In einer weiteren Ausführungsform kann vorgesehen sein, dass das Erlangen des optimalen Maschinenparameters 105 auf der Bestimmung einer optimalen angepassten Änderung beruht, welche wiederum auf einer minimalen Abweichung vom Sollwert des physischen Parameters aus der Menge der bestimmten Abweichungen vom Sollwert des physischen Parameters basiert. Die Bestimmung der optimalen angepassten Änderung kann beispielsweise umfassen, dass aus der Menge aller iterativ bestimmten Abweichungen des physischen Parameters vom Sollwert und den damit verknüpften angepassten Maschinenparametern, derjenige Index m bestimmt wird, für welchen die Abweichung des physischen Parameters vom Sollwert minimal ist. Die Bestimmung der optimalen angepassten Änderungen kann mittels Summation über alle angepassten Änderungen mit Indizes 1 ... m erfolgen. Basierend auf der so bestimmten optimalen angepassten Änderung kann der optimale Maschinenparameter erlangt werden.

Der optimale Maschinenparameter kann anschließend an die Blasformmaschine weitergeben werden 106.

In einer Ausführungsform kann vorgesehen sein, dass für die erste und die zweite Komponente ausführbarer Code generiert wird, um den Iterationsprozess während des Betriebs der Blasformmaschine mittels einer Steuereinheit der Blasformmaschine, welche eine CPU und eine GPU umfassen kann, auszuführen. Es kann vorgesehen sein, dass der ausführbare Code von der CPU der Steuereinheit und/oder von der GPU der Steuereinheit ausgeführt wird.

Figur 2 zeigt einen Trainingsprozess des dritten neuronalen Netzes basierend auf einem Reinforcement Learning Modell 200. Das trainierte dritte neuronale Netz kann anschließend durch die Interaktion mit dem ersten neuronalen Netz, wie es im Zusammenhang der Figur 1 beschrieben ist, einen optimalen Maschinenparameter zur Minimierung der Abweichung des physischen Parameters von einem Sollwert bestimmen. Das Reinforcement Learning Modell 200 umfasst eine erste 201 und eine zweite Komponente 202, welche miteinander interagieren. Die erste Komponente 201 kann dabei ein prädiktives Modell oder ein erstes neuronales Netz sein oder ein prädiktives Modell oder ein erstes neuronales Netz umfassen. Das prädiktive Modell kann beispielsweise als Entscheidungsbaum, als zufälliger Entscheidungsbaum, als verstärkter Entscheidungsbaum, als Polynommodell mit verschiedenen Ordnungen und Wechselwirkungen oder als lineares oder nicht-lineares ARX Modell ausgeführt sein. In einer bevorzugten Ausführungsform handelt es sich um ein trainiertes prädiktives Modell oder ein trainiertes erstes neuronales Netz, welches spezifisch mit für die Bestimmung der Abweichung des physischen Parameters basierend auf einer Änderung eines Maschinenparameters geeigneten Daten/Informationen trainiert wurde. Die erste Komponente 201 des Reinforcement Learning Modells stellt somit einen Zusammenhang zwischen dem Maschinenparameter, der Störgröße und der Abweichung des physischen Parameters eines Behälters von einem Sollwert her. Wie im Zusammenhang mit der Figur 1 bereits ausgeführt wurde, ist die erste Komponente 201 folglich ausgebildet, den Einfluss einer Änderung des Maschinenparameters und/oder der Störgröße auf den physischen Parameter eines Behälters vorherzusagen. Im Reinforcement Learning Bereich ist die erste Komponente auch als Environment und die zweite Komponente als Agent bekannt.

Die erste Komponente 201 stellt der zweiten Komponente 202 Informationen 207, 208 zur Verfügung, welche durch die zweite Komponente 202 verarbeitet werden. Basierend auf den verarbeitenden Informationen erzeugt die zweite Komponente 202 einen Output 206, welcher wiederum der ersten Komponente 201 zur Verfügung gestellt wird. In der hier beschriebenen Ausführungsform stellt die erste Komponente der zweiten Komponente einen Zustand der Blasformmaschine 208 und eine Abweichung des physischen Parameters von einem Sollwert 207 zur Verfügung. Ziel des Iterationsprozesses ist die Abweichung des physischen Parameters 207 zu minimieren. Hierfür generiert die zweite Komponente 202 basierend auf dem zur Verfügung gestellten Input 207, 208 eine angepasste Änderung eines Maschinenparameterwertes 206. Dieser Wert wird wiederum an die erste Komponente 201 weitergeben und die erste Komponente 201 bestimmt basierend auf der angepassten Änderung des Maschinenparameterwertes eine dieser angepassten Änderung zugeordnete Abweichung des physischen Parameters von einem Sollwert und einen Maschinenzustand. Die erste Komponente 201 übergibt die so bestimmten Werte an die zweite Komponente 202. Es kann vorgesehen sein, dass eine n-malige Wiederholung des eben beschriebenen Iterationsprozesses stattfindet, bevor dieser beendet wird. Alternativ kann auch vorgesehen sein den Iterationsprozess erst zu beenden, wenn die Änderung der Abweichung vom Sollwert über eine Anzahl von *i* Iterationsschritten kleiner als ein vorgegebener Grenzwert ist.

Zur Bestimmung der angepassten Änderung des Maschinenparameterwerts 206 basierend auf der von der ersten Komponente erhaltenen Abweichung des physischen Parameters von einem Sollwert 207 und dem Maschinenzustand 208 umfasst die zweite Komponente 202 ein zweites neuronales Netz 204 und ein drittes neuronales Netz 203. In einer bevorzugten Ausführungsform ist das zweite neuronale Netz ein trainiertes neuronales Netz, welches ausgebildet ist einen Zusammenhang zwischen dem von der ersten Komponente 201 übergebenem Maschinenzustand 208, der Abweichung des physischen Parameters von einem Sollwert 207 und der angepassten Änderung des Maschinenparameters 206 herzustellen. Das zweite neuronale Netz ist zudem ausgebildet basierend auf den von der ersten Komponente erhaltenen Informationen 206, 207 das dritte neuronale Netz zu aktualisieren, so dass dieses eine neue angepasste Änderung des Maschinenparameters bestimmt Das zweite neuronale Netz 204 kann als Reinforcement Learning Algorithmus ausgeführt sein. Das dritte neuronale Netz 203 ist ausgebildet auf die Abweichung des physischen Parameters von einem Sollwert 207 mittels einer angepassten Änderung des Maschinenparameters 206 zu reagieren, um die Abweichung des physischen Parameters von einem Sollwert zu minimieren.

Nach Abschluss des Trainingsprozesses kann das erste neuronale Netz der ersten Komponente 201 und das dritte neuronale Netz 203 des in der Figur 2 beschriebene Reinforcement Learning Modells entsprechend der in der Figur 1 beschriebenen Ausführungsform auf einer Blasformmaschine zum Einsatz gebracht werden. Das zweite neuronale Netz 204 der zweiten Komponente 203 ist nur für den oben beschriebenen Trainingsprozess des dritten neuronalen Netzes 203 vorgesehen. Das in der Figur 1 beschriebene Verfahren zur Minimierung der Abweichung eines physischen Parameters von einem Sollwert wir bevorzugt nur basierend auf der Interaktion des ersten neuronalen Netzes der ersten Komponente 201 und des vollständig trainierten dritten neuronalen Netzes 203 der zweiten Komponente 202 durchgeführt. Dazu kann insbesondere vorgesehen sein, dass nach Abschluss des beschriebenen Trainings nur das erste neuronale Netz und das dritte neuronale Netz auf der Blasformmaschine implementiert werden.

Hierfür gibt die erste Komponente 201 die bestimmte Abweichung des physischen Parameters 207 und den Zustand der Maschine 208 direkt an das trainierte dritte neuronale Netz 203 weiter, ohne dass diese vorher durch das zweite neuronale Netz 204 verarbeitet werden. Das dritte neuronale Netz 203 bestimmt dann direkt anhand der von der ersten Komponente 201 erhaltenen Parameter eine angepasste Änderung des Maschinenparameters 206, welche wieder an die erste Komponente 201 weitergegeben wird. Wie bereits im Zusammenhang mit der Figur 1 beschreiben, kann dieser Iterationsprozess so lange durchgeführt werden, bis ein statischer Grenzwert n erreicht ist, oder bis die die Änderung der Abweichung des physischen Parameters vom Sollwert über eine Anzahl von *i* Iterationsschritten kleiner als ein vorgegebener Grenzwert ist und/oder wenn die Abweichung des Sollwerts über eine Anzahl von *i* Iterationsschritten unterhalb eines beispielsweise durch die zu erreichende Produktionsgenauigkeit vorgegebenen Grenzwertes d liegt. Basierend auf der iterativ bestimmten angepassten Änderung des Maschinenparameters 206 kann letztendlich der im Zusammenhang mit der Figur 1 beschriebene optimale Maschinenparameter 105 erlangt werden, welcher dann an die Blasformmaschine übergeben werden kann. Basierend darauf kann ein Maschinenparameter der Blasformmaschine eingestellt werden 106 und ein Behälter erzeugt werden, welcher eine minimale Abweichung eines physischen Parameters von einem Sollwert aufweist.

Figur 3 zeigt eine Blasformmaschine 300 zum Herstellen von Behältern 302 aus Vorformlingen 301. Die in der Figur 3 dargestellte Blasformmaschine ist zur Durchführung eines Verfahrens entsprechend der in den Figuren 1 und 2 beschriebenen Ausführungsformen ausgebildet.

Die Blasformmaschine gemäß der in der Figur 3 gezeigten Ausführungsform umfasst eine Sensoreinrichtung 305, eine Steuervorrichtung 306, optional eine Einrichtung 303 zur Vorbehandlung der Vorformlinge und eine Blasformeinrichtung 304. In der hier gezeigten Ausführungsform ist die optionale Einrichtung 303 zum Vorbehandeln der Vorformlinge stromauf der Blasformeinrichtung 304 angeordnet. Die Vorformlinge 301/Behälter 302 können mittels einer oder mehrerer Transportvorrichtungen 312 durch die Blasformmaschine 300 transportiert werden.

Die Transportvorrichtung 312 ist aus Gründen der Übersichtlichkeit als lineare Transportvorrichtung dargestellt. In einer alternativen Ausführungsform können die Vorformlinge/Behälter auch mittels einer oder mehrerer Rundläufereinheiten, insbesondere Transportsteme, die die Vorformlinge und/oder Behälter beispielsweise im Neckhandling-Verfahren transportieren können, durch die Blasformmaschine befördert werden. So kann es beispielsweise vorgesehen sein, dass die optionale Einrichtung 303 zum Vorbehandlung der Vorformlinge entlang des Umfangs einer ersten Rundläufereinheit und die Blasformeinrichtung 304 entlang des Umfangs einer zweiten Rundläufereinheit angeordnet ist. Entsprechend der oben beschriebenen Ausführungsform mit einer linearen Transportvorrichtung, sind auch die zwei Rundläufereinheiten derart angeordnet, dass die erste Rundläufereinheit stromauf der zweiten Rundläufereinheit angeordnet ist.

Zu Beginn werden die Vorformlinge 301 optional der Vorrichtung zur Vorbehandlung 303 zugeführt. Bei der Vorbehandlungseinrichtung 303 kann es sich um eine Heizvorrichtung handeln, mittels welcher die Vorformlinge auf eine bestimmte Zieltemperatur erwärmt werden können. Dies kann beispielsweise mittels einer oder mehrerer Heizlampen, welche beispielsweise als Infrarotlampen ausgestaltet sein können, realisiert werden. Die Heizvorrichtung kann zudem ausgebildet sein, ein bestimmtes Temperaturprofil zu erzeugen, so dass die Temperatur des Vorformlings nicht nur durch eine Temperatur, sondern durch ein Temperaturprofil (beispielsweise entlang der Länge des Vorformlings) beschrieben wird.

In einer bevorzugten Ausführungsform wird der Vorformling zur Erwärmung mit elektromagnetischer Strahlung, wie beispielsweise Mikrowellenstrahlung, beaufschlagt. Dabei wird das elektromagnetische Feld, welches für die Erwärmung des Vorformlings verantwortlich ist, durch zustellbare Funktionseinheiten (z.B. Schieber) derart beeinflusst, dass mittels des elektromagnetischen Feldes an dem Vorformling ein bestimmtes Temperaturprofil erzeugt werden kann. Die Funktionseinheiten können über eine Steuereinheit 306 angesteuert werden. Insbesondere kann zur Erzeugung des Temperaturprofils in dem Vorformling ein Resonator, welcher zum Erzeugen von elektromagnetischer Strahlung einer bestimmten Feldstärkenverteilung ausgebildet ist und mittels der Steuereinheit 306 gesteuert werden kann, vorgesehen sein. Durch das Beaufschlagen des Vorformlings mit dem durch den Resonator erzeugten elektromagnetischen Feld mit vorgegebener Feldstärkenverteilung kann eine bestimmte Temperaturverteilung im Vorformling erzeugt werden. Die Steuervorrichtung 306 zur Steuerung der Funktionseinheiten oder des Resonators kann mit einer Sensoreinrichtung 305 verbunden sein. So kann die Steuervorrichtung 306 mittels den von der Sensoreinrichtung 305 erhaltenen Daten, wobei es sich bei den Daten beispielsweise um den physischen Parameter des Behälters handeln kann, den Zustand des Behälters bewerten und bei Bedarf durch Steuerung der Funktionseinheiten oder des Resonators das Temperaturprofil des Vorformlings derart anpassen, dass der Behälter den geforderten Qualitätskriterien entspricht.

In einer alternativen bevorzugten Ausführungsform ist die Vorrichtung zum Vorbehandeln 303 als Laserheizung ausgestaltet. Auch bei dieser Ausführungsform kann es vorgesehen sein, dass die Steuervorrichtung 306 basierend auf den von der Sensoreinrichtung 305 ermittelten Daten, Parameter der Laserheizung wie beispielsweise eine Leistung, eine Pulsdauer, eine Widerholungsrate, eine Wellenlänge, eine Kohärenzlänge, eine Polarisation, einen Strahldurchmesser, eine Energiedichte, ein Strahlprofil, eine Divergenz oder eine Spotgröße, derart anpassen kann um ein bestimmtes Temperaturprofil im Vorformling zu erzeugen. Somit kann die Laserheizung basierend auf den durch die Sensoreinrichtung 305 bestimmten Daten, welche beispielsweise den physischen Parameter des Behälters umfassen können, durch die Steuervorrichtung 306 gesteuert werden, um ein bestimmtes Temperaturprofil im Behälter zu erzeugen, so dass Behälter mit den geforderten Qualitätskriterien gefertigt werden können.

Die erwärmten Vorformlinge 301 werden anschließend in die Blasformeinrichtung 304 transportiert. Vorzugsweise umfasst die Blasformeinrichtung eine Blasform und eine Vorrichtung zum Beaufschlagen des Vorformlings mit Blasluft. In der Blasformvorrichtung werden die erwärmten Vorformlinge in eine Blasform überführt und mit Blasluft beaufschlagt, was zu einer Extrusion der Vorformlinge in der Blasfrom führt.

Bei der Blasformeinrichtung kann es sich um eine Streckblaseinrichtung oder eine Extrusionsblasvorrichtung handeln. Beim Streckblasen wird neben der Extrusion des Vorformlings mit Blasluft ein Verstrecken in Längsrichtung durch Einfuhr einer Reckstange durchgeführt. Beim Extrusionblasen wird der Vorformling nur mit Blasluft beaufschlagt, um ein Ausformen zum Behälter in der Form zu bewirken.

Nach dem Blasvorgang wird der Behälter aus der Blasform entfernt. Optional kann vorgesehen sein, dass der Behälter durch eine Kühleinrichtung geführt wird.

Um die Qualität eines blasgeformten Behälters zu beurteilen, wird anschließend eine Abweichung eines physischen Parameters des Behälters mittels einer Sensoreinrichtung 305 bestimmt. In einer Ausführungsform kann die Einrichtung ausgebildet sein eine für die Wanddicke eines Behälters charakteristische Größe, eine Wanddicke, eine für die Bodendicke charakteristische Größe, eine Bodendicke und/oder eine Molekülausrichtung des Behälters zu bestimmen. Die für die Wanddicke charakteristische Größe, die Wanddicke, die für die Bodendicke charakteristische Größe, die Bodendicke und/oder die Molekülausrichtung eines Behälters stehen in direkter Verbindung mit der maximalen Top- und Sideload eines Behälters und sind somit besonders geeignete Parameter, um die Qualität eines blasgeformten Behälters zu beurteilen.

Die Sensoreinrichtung 305 ist zudem ausgebildet, wenigstens einen Maschinenparameter der Blasformmaschine und/oder der Einrichtung zum Vorbehandeln der Vorformlinge zu bestimmen. Alternativ können die Maschinenparameter auch in einem Speicher einer Steuervorrichtung 306, welche zur Steuerung der Blasformmaschine ausgebildet ist, hinterlegt sein. In diesem Fall ist ein messtechnisches Bestimmen der Maschinenparameter durch die Sensoreinrichtung 305 nicht notwendig und der wenigstens eine Maschinenparameter kann beispielsweise aus dem Speicher erlangt werden. Auch dies soll als ein Bestimmen eines Maschinenparameters verstanden werden. Optional kann die Sensoreinrichtung 305 ausgebildet sein, wenigstens eine Störgröße messen.

In einer Ausführungsform kann die Sensoreinrichtung einen ersten Sensor zum Bestimmen eines Maschinenparameters 308, 309, einen zweiten Sensor zur Messung einer Abweichung eines physischen Parameters eines Behälters 310 und einen dritten Sensor zum Messen einer Störgröße 307 umfassen. Der Maschinenparameter und die Störgröße sind Parameter, welche einen direkten Einfluss auf den physischen Parameter haben. Bei der Störgröße kann es sich beispielsweise um eine Umgebungsbedingung oder um eine Eigenschaft des Vorformlings, aus welchem der Behälter hergestellt wird, handeln. Der zweite Sensor kann beispielsweise ein Ultraschallsensor oder ein spektroskopischer Sensor zum Messen einer für eine Wanddicke eines Behälters charakteristische Größe, einer Wanddicke, einer für eine Bodendicke eines Behälters charakteristischen Größe, einer Bodendicke eines Behälters, oder ein spektroskopischer Sensor zum Messen einer Molekülausrichtung des Behälters sein.. Der spektroskopische Sensor zum Messen der für die Wand- oder Bodendicke charakteristischen Größe kann beispielsweise ausgebildet sein, einen Anteil einer durch eine Wand- oder Bodendicke transmittierten Intensität elektromagnetischer Strahlung an einer auf die Boden- oder Wanddicke eingestrahlten Intensität der elektromagnetischen Strahlung, zu bestimmen. Die für die Wand- oder Bodendicke charakteristische Größe kann neben der Wand- oder der Bodendicke auch von anderen Kenngrößen des Behälters, wie beispielsweise einer Materialzusammensetzung abhängen. Da die für Wand- oder Bodendicke charakteristische Größe von verschiedenen Kenngrößen des Behälters abhängen kann, ist die Messung der charakteristischen Größe und deren Vergleich mit einem Sollwert besser geeignet für die Beurteilung der Qualität des Behälters als die bloße Messung einer Wand- oder Bodendicke. Der dritte Sensor zur Messung einer Störgröße kann beispielsweise ein Sensor zur Messung einer Umgebungsbedingung sein. Dabei kann es sich beispielsweise um einen Temperatur-, einen Luftfeuchtigkeits-, oder einen Drucksensor handeln. Der dritte Sensor zur Messung einer Störgröße kann auch als Sensor zum Messen einer Eigenschaft des Vorformlings ausgebildet sein. So kann der Sensor beispielsweise ein spektroskopischer Sensor zum Bestimmen einer Materialzusammensetzung oder eines Kristallisationsgrades eines Vorformlings sein. Die Sensoreinrichtung 305 ist zudem ausgebildet die messtechnisch erfassten Daten an eine Steuervorrichtung 306 weiterzugeben.

Die Steuervorrichtung 306 ist ausgebildet, das in den Figuren 1 und 2 beschrieben Verfahren gemäß jeder der in diesem Zusammenhang beschriebenen Ausführungsformen auszuführen. Die Steuervorrichtung kann der Blasformmaschine direkt zugeordnet sein. Es kann sich jedoch auch um eine externe Steuervorrichtung handeln. Grundsätzlich kann die Steuervorrichtung als Computer oder Server ausgeführt ist.

Die Steuervorrichtung 306 ist insbesondere ausgebildet, den Einfluss einer Änderung des Maschinenparameterwerts und/oder einer Störgröße auf den physischen Parameter eines Behälters basierend auf einem Iterationsprozess zu bestimmen. Mittels des Iterationsprozesses kann die Steuervorrichtung 306 einen optimalen Maschinenparameterwert zum Erreichen einer minimalen Abweichung von dem Sollwert des physischen Parameters bestimmen. In einem ersten Iterationsschritt bestimmt die Steuervorrichtung 306 dabei eine Abweichung von dem Sollwert des physischen Parameters eines blasgeformten Behälters basierend auf einer Änderung des Maschinenparameters. In einer Ausführungsform kann vorgesehen sein, dass die Änderung des Maschinenparameters der Steuervorrichtung vor Beginn des Iterationsprozesses übergeben wird und dass diese mit einem Startwert initialisiert ist. In einem zweiten Iterationsschritt bestimmt die Steuervorrichtung 306 eine angepasste Änderung eines Maschinenparameterwerts basierend auf der bestimmten Abweichung des physischen Parameters von dem Sollwert. Zur Ausführung des Iterationsprozesses kann die Steuervorrichtung die zwei im Zusammenhang mit der Figur 1 beschriebenen neuronale Netze umfassen. Basierend auf der durch den Iterationsprozess bestimmten angepassten Änderung kann die Steuervorrichtung einen optimalen Maschinenparameter erlangen, basierend auf welchem die Steuereinrichtung die Blasformmaschine steuert, um die Abweichung des physischen Parameters des Behälters von einem Sollwert zu minimieren.

## Patentansprüche

1. Verfahren (100) zur Minimierung einer Abweichung eines physischen Parameters eines blasgeformten Behälters von einem Soll-Wert, wobei das Verfahren umfasst:
- Bestimmen (101) eines einem Maschinenparameterwertes einer Blasformmaschine zugeordneten physischen Parameters eines Behälters,
- Basierend auf dem physischen Parameter und dem Soll-Wert, Bestimmen einer Änderung eines Maschinenparameters (101a),
- Basierend auf einem Iterationsprozess (102), Bestimmen eines optimalen Maschinenparameterwerts zum Erreichen einer minimalen Abweichung von dem Sollwert des physischen Parameters eines blasgeformten Behälters, der Iterationsprozess umfassend einen
- Ersten Iterationsschritt (103) zum Bestimmen einer Abweichung von dem Sollwert des physischen Parameters eines blasgeformten Behälters basierend auf der Änderung des Maschinenparameters, und einen
- Zweiten Iterationsschritts (104) zum Bestimmen einer angepassten Änderung eines Maschinenparameterwerts basierend auf der bestimmten Abweichung des physischen Parameters eines blasgeformten Behälters von dem Sollwert,
- Erlangen des optimalen Maschinenparameterwertes;
das Verfahren weiterhin umfassend ein Steuern der Blasformmaschine basierend auf dem erlangten optimalen Maschinenparameterwert.

2. Verfahren nach Anspruch 1, wobei zum Bestimmen der Abweichung von dem Sollwert des physischen Parameters eines blasgeformten Behälters ein prädiktives Modell verwendet wird.

3. Verfahren nach Anspruch 2, wobei das prädiktive Modell ein erstes neuronales Netz ist oder ein erstes neuronales Netz umfasst.

4. Verfahren nach einem der Ansprüche 1 bis 3, wobei der Iterationsprozess (102) auf einem Reinforcement Learning Modell (200) basiert.

5. Verfahren nach Anspruch 4, wobei das Reinforcement Learning Modell (200) eine erste Komponente (201) und eine zweite Komponente (202) umfasst und wobei durch die Interaktion der ersten Komponente (201) mit der zweiten Komponente (202) der optimale Maschinenparameter (105) zum Minimieren der Abweichung des physischen Parameters eines blasgeformten Behälters von einem Soll-Wert erlangt werden kann.

6. Verfahren nach Anspruch 5, wobei die erste Komponente (201) des Reinforcement Learning Modells das prädiktive Modell oder das erste neuronale Netz ist oder das prädiktive Modell oder das erste neuronale Netz umfasst.

7. Verfahren nach einem der Ansprüche 5 oder 6, wobei die zweite Komponente (202) des Reinforcement Learning Modells aus einem dritten neuronalen Netz (203) besteht oder ein drittes neuronales Netz (203) umfasst.

8. Verfahren nach Anspruch 7, wobei der erste Iterationsschritt (103) zum Bestimmen des physischen Parameters eines blasgeformten Behälters basierend auf der Änderung des Maschinenparameters durch das prädiktive Modell oder das erste neuronale Netz und der zweite Iterationsschritt (104) zum Bestimmen einer angepassten Änderung eines Maschinenparameterwerts basierend auf der Abweichung des physischen Parameters vom Sollwert durch das dritte neuronale Netz ausgeführt wird.

9. Verfahren nach einem der Ansprüche 1 bis 8, wobei das Erlangen des optimalen Maschinenparameterwerts (105) auf einem Bestimmen einer optimalen angepassten Änderung basierend auf einer minimalen Abweichung vom Sollwert des physischen Parameters aus der Menge der Abweichungen vom Sollwert des physischen Parameters beruht.

10. Verfahren nach Anspruch 9, wobei der physische Parameter des blasgeformten Behälters eine für die Wanddicke charakteristische Größe, eine Wanddicke, eine für die Bodendick charakteristische Größe, eine für die Bodendicke charakteristische Größe, eine Bodendicke und/oder eine Molekülausrichtung ist oder diese umfasst.

11. Verfahren nach einem der Ansprüche 9 oder 10, wobei neben dem einem Maschinenparameterwertes einer Blasformmaschine zugeordneten physischen Parameter eines Behälters eine Störgröße bestimmt wird, wobei die Störgröße eine Umgebungsbedingung und/oder eine Eigenschaft eines Vorformlings ist.

12. Blasformmaschine (300) zum Herstellen von Behältern, umfassend eine Sensoreinrichtung (305) und eine Steuervorrichtung (306), wobei die Sensoreinrichtung (305) ausgebildet ist, einen einem Maschinenparameterwert der Blasformmaschine zugeordneten physischen Parameter eines Behälters (302) zu bestimmen und den Maschinenparameterwert und den physischen Parameter an die Steuervorrichtung (306) weiterzugeben, wobei die Steuervorrichtung (306) ausgebildet ist zum
- Basierend auf dem physischen Parameter und dem Soll-Wert, Bestimmen einer Änderung eines Maschinenparameterwertes (101a),
- Basierend auf einem Iterationsprozess (102), Bestimmen eines optimalen Maschinenparameterwerts zum Erreichen einer minimalen Abweichung von dem Sollwert des physischen Parameters, der Iterationsprozess umfassend einen
- Ersten Iterationsschritt (103) zum Bestimmen einer Abweichung von dem Sollwert des physischen Parameters eines blasgeformten Behälters basierend auf einer Änderung des Maschinenparameters, und einen
- Zweiten Iterationsschritts (104) zum Bestimmen einer angepassten Änderung eines Maschinenparameterwerts basierend auf der Abweichung des physischen Parameters von dem Sollwert,
- Erlangen des optimalen Maschinenparameterwertes (105),
und die Blasformmaschine basierend auf dem erlangten optimalen Maschinenparameterwert zu steuern.

13. Blasformmaschine (300) nach Anspruch 12, wobei zum Bestimmen der Abweichung von dem Sollwert des physischen Parameter eines Behälters ein prädiktives Modell vorgesehen ist und der Iterationsprozess (102) auf einem Reinforcement Learning Modell basiert (200), wobei das Reinforcement Learning Modell (200) eine erste (201) und eine zweite Komponente (202) umfasst und wobei die erste Komponente (201) das prädiktive Modell umfasst, welches als ein erstes neuronales Netz ausgebildet sein kann, und die zweite Komponente (202) ein zweites (204) und ein drittes neuronales Netz (203) umfasst.

14. Blasformmaschine (300) nach Anspruch 12 oder 13, wobei die Sensoreinrichtung (305) einen Sensor (310), der zur Bestimmung des physischen Parameters des blasgeformten Behälters ausgebildet ist, umfasst.

15. Blasformmaschine nach Anspruch 14, wobei der Sensor (310) zur Bestimmung einer für eine Wanddicke charakteristischen Größe, eine Wanddicke, eine für eine Bodendicke charakteristische Größe, eine Bodendicke, und/oder einer Molekülausrichtung eines blasgeformten Behälters ausgebildet ist.

## Claims

1. Method (100) for minimizing a deviation of a physical parameter of a blow-molded container from a target value, the method comprising:
- determining (101) a physical parameter of a container assigned to a machine parameter value of a blow molding machine,
- based on the physical parameter and the target value, determining a change in a machine parameter (101a),
- based on an iteration process (102), determining an optimal machine parameter value for achieving a minimum deviation from the target value of the physical parameter of a blow-molded container, the iteration process comprising a
- first iteration step (103) for determining a deviation from the target value of the physical parameter of a blow-molded container based on the change in the machine parameter value, and a
- second iteration step (104) for determining an adjusted change in a machine parameter value based on the determined deviation of the physical parameter of a blow-molded container from the target value,
- obtaining the optimal machine parameter value;
the method furthermore comprising controlling the blow molding machine based on the obtained optimal machine parameter value.

2. Method according to claim 1, wherein a predictive model is used to determine the deviation from the target value of the physical parameter of a blow-molded container.

3. Method according to claim 2, wherein the predictive model is a first neural network or comprises a first neural network.

4. Method according to one of claims 1 to 3, wherein the iteration process (102) is based on a reinforcement learning model (200).

5. Method according to claim 4, wherein the reinforcement learning model (200) comprises a first component (201) and a second component (202), and wherein by the interaction of the first component (201) with the second component (202), the optimal machine parameter (105) for minimizing the deviation of the physical parameter of a blow-molded container from a target value can be obtained.

6. Method according to claim 5, wherein the first component (201) of the reinforcement learning model is the predictive model or the first neural network or comprises the predictive model or the first neural network.

7. Method according to one of claims 5 or 6, wherein the second component (202) of the reinforcement learning model consists of a third neural network (203) or comprises a third neural network (203).

8. Method according to claim 7, wherein the first iteration step (103) for determining the physical parameter of a blow-molded container based on the change in the machine parameter is performed by the predictive model or the first neural network, and the second iteration step (104) for determining an adjusted change in a machine parameter value based on the deviation of the physical parameter from the target value is performed by the third neural network.

9. Method according to one of claims 1 to 8, wherein obtaining the optimal machine parameter value (105) is based on a determination of an optimal adjusted change based on a minimum deviation from the target value of the physical parameter from the set of deviations from the target value of the physical parameter.

10. Method according to claim 9, wherein the physical parameter of the blow-molded container is or comprises a variable characteristic of the wall thickness, a wall thickness, a variable characteristic of the bottom thickness, a variable characteristic of the bottom thickness, a bottom thickness, and/or a molecular orientation.

11. Method according to one of claims 9 or 10, wherein, in addition to the physical parameter of a container assigned to a machine parameter value of a blow molding machine, a disturbance variable is determined, wherein the disturbance variable is an environmental condition and/or a property of a preform.

12. Blow molding machine (300) for producing containers, comprising a sensor device (305) and a control apparatus (306), wherein the sensor device (305) is designed to determine a physical parameter of a container (302) assigned to a machine parameter value of the blow molding machine and to pass the machine parameter value and the physical parameter to the control apparatus (306), wherein the control apparatus (306) is designed to
- based on the physical parameter and the target value, determine a change in a machine parameter value (101a),
- based on an iteration process (102), determine an optimal machine parameter value for achieving a minimum deviation from the target value of the physical parameter, the iteration process comprising a
- first iteration step (103) for determining a deviation from the target value of the physical parameter of a blow-molded container based on a change in the machine parameter value, and a
- second iteration step (104) for determining an adjusted change in a machine parameter value based on the deviation of the physical parameter from the target value,
- obtaining the optimal machine parameter value (105),
and to control the blow molding machine based on the obtained optimal machine parameter value.

13. Blow molding machine (300) according to claim 12, wherein a predictive model is provided for determining the deviation from the target value of the physical parameter of a container, and the iteration process (102) is based on a reinforcement learning model (200), wherein the reinforcement learning model (200) comprises a first (201) and a second component (202), and wherein the first component (201) comprises the predictive model, which may be designed as a first neural network, and the second component (202) comprises a second (204) and a third neural network (203).

14. Blow molding machine (300) according to claim 12 or 13, wherein the sensor device (305) comprises a sensor (310) designed to determine the physical parameter of the blow-molded container.

15. Blow molding machine according to claim 14, wherein the sensor (310) is designed to determine a variable characteristic of a wall thickness, a wall thickness, a variable characteristic of a bottom thickness, a bottom thickness, and/or a molecular orientation of a blow-molded container.

## Revendications

1. Procédé (100) pour minimiser un écart d'un paramètre physique d'un récipient moulé par soufflage par rapport à une valeur de consigne, dans lequel le procédé comprend les étapes consistant à :
- déterminer (101) un paramètre physique d'un récipient associé à une valeur de paramètre de machine d'une machine de moulage par soufflage,
- sur la base du paramètre physique et de la valeur de consigne, déterminer une modification d'un paramètre de machine (101a),
- sur la base d'un processus d'itération (102), déterminer une valeur de paramètre de machine optimale pour atteindre un écart minimal par rapport à la valeur de consigne du paramètre physique d'un récipient moulé par soufflage, le processus d'itération comprenant
- une première étape d'itération (103) pour déterminer un écart par rapport à la valeur de consigne du paramètre physique d'un récipient moulé par soufflage sur la base de la modification du paramètre de machine, et
- une seconde étape d'itération (104) pour déterminer une modification adaptée d'une valeur de paramètre de machine sur la base de l'écart déterminé du paramètre physique d'un récipient moulé par soufflage par rapport à la valeur de consigne,
- obtenir la valeur de paramètre de machine optimale ;
le procédé comprenant également une commande de la machine de moulage par soufflage sur la base de la valeur de paramètre de machine optimale obtenue.

2. Procédé selon la revendication 1, dans lequel un modèle prédictif est utilisé pour déterminer l'écart par rapport à la valeur de consigne du paramètre physique d'un récipient moulé par soufflage.

3. Procédé selon la revendication 2, dans lequel le modèle prédictif est un premier réseau neuronal ou comprend un premier réseau neuronal.

4. Procédé selon l'une quelconque des revendications 1 à 3, dans lequel le processus d'itération (102) est basé sur un modèle d'apprentissage par renforcement (200).

5. Procédé selon la revendication 4, dans lequel le modèle d'apprentissage par renforcement (200) comprend un premier composant (201) et un second composant (202), et dans lequel par l'intermédiaire de l'interaction du premier composant (201) avec le second composant (202), il est possible d'obtenir le paramètre de machine optimal (105) pour minimiser l'écart du paramètre physique d'un récipient moulé par soufflage par rapport à une valeur de consigne.

6. Procédé selon la revendication 5, dans lequel le premier composant (201) du modèle d'apprentissage par renforcement est le modèle prédictif ou le premier réseau neuronal, ou comprend le modèle prédictif ou le premier réseau neuronal.

7. Procédé selon l'une quelconque des revendications 5 ou 6, dans lequel le second composant (202) du modèle d'apprentissage par renforcement est constitué d'un troisième réseau neuronal (203) ou comprend un troisième réseau neuronal (203).

8. Procédé selon la revendication 7, dans lequel la première étape d'itération (103) pour déterminer le paramètre physique d'un récipient moulé par soufflage est effectuée sur la base de la modification du paramètre de machine par l'intermédiaire du modèle prédictif ou du premier réseau neuronal, et la seconde étape d'itération (104) pour déterminer une modification adaptée d'une valeur de paramètre de machine est effectuée sur la base de l'écart du paramètre physique par rapport à la valeur de consigne par l'intermédiaire du troisième réseau neuronal.

9. Procédé selon l'une quelconque des revendications 1 à 8, dans lequel l'obtention de la valeur de paramètre de machine optimale (105) est basée sur la détermination d'une modification adaptée optimale sur la base d'un écart minimal par rapport à la valeur de consigne du paramètre physique à partir de la quantité d'écarts par rapport à la valeur de consigne du paramètre physique.

10. Procédé selon la revendication 9, dans lequel le paramètre physique du récipient moulé par soufflage est ou comprend une grandeur caractéristique de l'épaisseur de paroi, une épaisseur de paroi, une grandeur caractéristique d'épaisseur de fond, une grandeur caractéristique d'épaisseur de fond, une épaisseur de fond et/ou une orientation moléculaire.

11. Procédé selon l'une quelconque des revendications 9 ou 10, dans lequel une grandeur de perturbation est déterminée en plus du paramètre physique d'un récipient associé à une valeur de paramètre de machine d'une machine de moulage par soufflage, dans lequel la grandeur de perturbation est une condition environnementale et/ou une propriété d'une préforme.

12. Machine de moulage par soufflage (300) pour la fabrication de récipients, comprenant un dispositif capteur (305) et un dispositif de commande (306), dans laquelle le dispositif de capteur (305) est conçu pour déterminer un paramètre physique d'un récipient (302) associé à une valeur de paramètre de machine de la machine de moulage par soufflage, et pour transmettre la valeur de paramètre de machine et le paramètre physique au dispositif de commande (306), dans laquelle le dispositif de commande (306) est conçu pour
- sur la base du paramètre physique et de la valeur de consigne, déterminer une modification d'une valeur de paramètre de machine (101a),
- sur la base d'un processus d'itération (102), déterminer une valeur de paramètre de machine optimale pour atteindre un écart minimal par rapport à la valeur de consigne du paramètre physique, le processus d'itération comprenant
- une première étape d'itération (103) pour déterminer un écart par rapport à la valeur de consigne du paramètre physique d'un récipient moulé par soufflage sur la base de la modification du paramètre de machine, et
- une seconde étape d'itération (104) pour déterminer une modification adaptée d'une valeur de paramètre de machine sur la base de l'écart du paramètre physique par rapport à la valeur de consigne,
- obtenir la valeur de paramètre de machine optimale (105),
et commander la machine de moulage par soufflage en fonction de la valeur de paramètre de machine optimale obtenue.

13. Machine de moulage par soufflage (300) selon la revendication 12, dans laquelle un modèle prédictif est prévu pour déterminer l'écart par rapport à la valeur de consigne du paramètre physique d'un récipient et le processus d'itération (102) est basé sur un modèle d'apprentissage par renforcement (200), dans laquelle le modèle d'apprentissage par renforcement (200) comprend un premier (201) et un second composant (202) et dans laquelle le premier composant (201) comprend le modèle prédictif, qui peut être formé sous la forme d'un premier réseau neuronal, et le second composant (202) comprend un deuxième (204) et un troisième réseau neuronal (203).

14. Machine de moulage par soufflage (300) selon la revendication 12 ou 13, dans laquelle le dispositif capteur (305) comprend un capteur (310) conçu pour déterminer le paramètre physique du récipient moulé par soufflage.

15. Machine de moulage par soufflage selon la revendication 14, dans laquelle le capteur (310) est conçu pour déterminer une grandeur caractéristique d'épaisseur de paroi, une épaisseur de paroi, une grandeur caractéristique d'une épaisseur de fond, une épaisseur de fond et/ou une orientation moléculaire d'un récipient moulé par soufflage.
